**Europäisches Patentamt**

**European Patent Office**

**Office européen des brevets**

(19)

(11) Publication number: **0 049 482**

**A1**

(12) # EUROPEAN PATENT APPLICATION

(21) Application number: **81107801.3**

(22) Date of filing: **01.10.81**

(51) Int. Cl.³: **B 60 P 1/16**

(30) Priority: **07.10.80 CA 361690**

(43) Date of publication of application:
**14.04.82 Bulletin 82/15**

(84) Designated Contracting States:
**AT BE CH DE FR GB IT LI LU NL SE**

(71) Applicant: **Chabot, Joseph**
**1591, rue Bédard**
**Vimont Laval Province de Québec H7M 2L8(CA)**

(72) Inventor: **Chabot, Joseph**
**1591, rue Bédard**
**Vimont Laval Province de Québec H7M 2L8(CA)**

(74) Representative: **May, Hans Ulrich**
**Thierschstrasse 27**
**D-8000 München 22(DE)**

(54) A lift system for raising the dump box of a dump truck.

(57) The lift system comprises a pair of hydraulic telescopic arms (5) which are laterally crossed defining an X-shape configuration when seen longitudinally. Both the upper and lower end of each arm is pivotally secured to the front wall of the dump box and the truck frame respectively. The pivotal securing means (9, 10; 12, 13) provided at each upper and lower end of the arms allow for simultaneous longitudinal and lateral pivoting of the arms. Power means are provided to raise the arms.

Fig. 1

EP 0 049 482 A1

- 1 -

Field of the invention

The present invention relates to means used to raise the dump box of a dump truck, more specifically to a novel system making use of telescopic hydraulic arms.

Background of the invention

Systems used to raise the dump box of a dump truck usually have recourse to a single hydraulic arm whose lower end is fixed to the chassis or frame of the truck and the upper end secured to the center of the front of the dump box. Such a system is generally adequate on flat level ground.

However, it frequently happens that a dump truck must discharge its load on an inclined surface. When this is the case, there is a danger that the load in the dump box may shift as the latter is being raised thus causing the dump box to twist in its pivotal mountings or even causing the truck to fall on its side. Even if the load does not shift, raising the dump box on inclined surface also raises the latter's center of gravity thus increasing the likelihood of an accident. In either situation, the damage caused to the truck may be expensive and time-consuming to repair.

Objects of the invention

Accordingly, it is a prime object of the present invention to provide a lift system for a dump truck which positively eliminates the possibility of a dump box tilting as it is being raised to discharge a load.

It is another object of the present invention to provide a dump box lift system which utilizes a pair of telescopic hydraulic arms.

It is yet another object of the present invention to provide a dump box lift system which is inexpensive and easy to install.

## Summary of the invention

The above and other objects and advantages of the present invention are realized in accordance with a preferred embodiment comprising a dump truck having an elongated horizontal frame and a dump box pivotally secured at the rear end of the frame.

The lift system is located at the front of the truck frame, behind the cab. It consists of a pair of hydraulic, telescopic arms which are laterally inclined and upwardly converging so as to define an inverted V-shape or an X-shape when seen from the front. Each arm is provided at its lower end with a first pivotal securing means. This means attaches the lower end of each arm to the front portion of the dump box frame, such that the arm may pivot both laterally and longitudinally.

The upper end of each arm is provided with a second pivotal securing means which attaches the arm to the front wall of the dump box and also allows both lateral and longitudinal pivoting.

Conventional power means are provided to raise the hydraulic arms.

The above will be more clearly understood by having referral to the preferred embodiments of the invention, illustrated by way of the accompanying drawings, in which:

## Brief description of the drawings

Figure 1 is a perspective view of a raised dump box and truck frame, showing the telescopic arms attached according to a first embodiment;

Figure 2 is another perspecitve view showing the telescopic arms attached according to a second embodiment of the invention;

Figure 3 is a front end elevation of the dump box and telescopic arms in lowered position, also showing in dashed outline the arms and dump box in raised position;

Figure 4 is a top plan view of the telescopic arms in lowered position, also showing the front portion of the truck frame and, in dashed outline, the dump box; and

Figure 5 is a side elevation of the front of the dump box and telescopic arms in lowered position and, in dashed outline, the arms and dump box in raised position.

Like numerals refer to like elements throughout the drawings.

Detailed description of the invention

The lift system according to the present invention comprises a dump box 1 and an elongated truck frame 2 provided with rear tandem wheels 3. Dump box 1 is pivotally secured to frame 2 at the rear end of the latter, as indicated by the numeral 4.

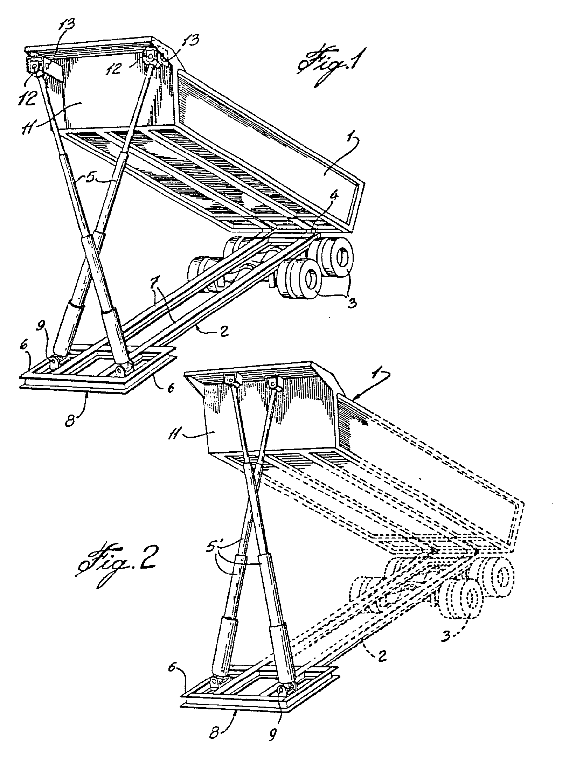

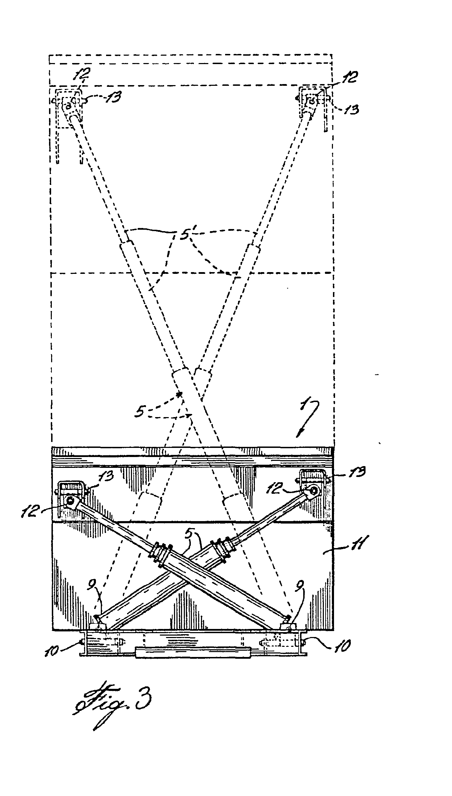

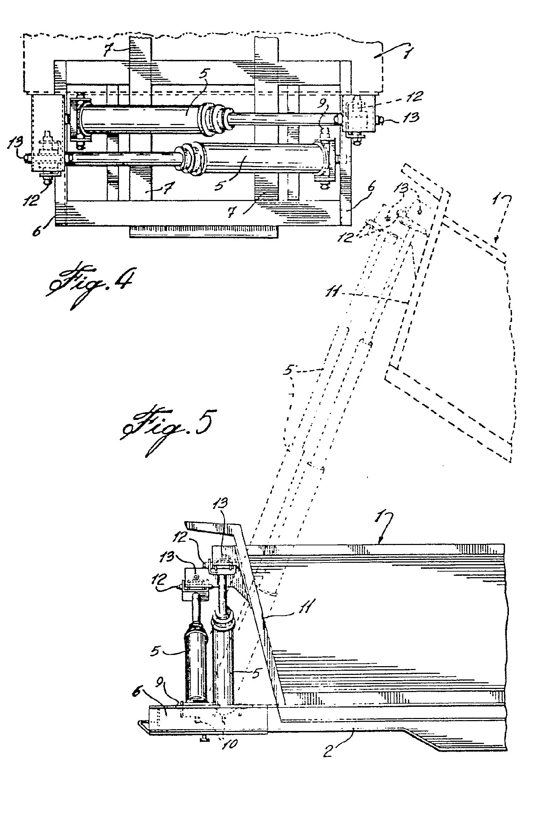

The front end of dump box 1 is raised and lowered by means of a pair of hydraulic telescopic arms 5. Each arm 5 is composed of a plurality (preferably four) telescopic members 5' adapted to slide one within the other. As seen clearly in Figure 1-3, arms 5 are upwardly converging and are laterally crossed, defining an X-shape configuration when seen from the front. Such a configuration prevents the dump box 1 and frame 2 from twisting torsionally to either side, as will be explained below.

The front portion 8 of frame 2 is widened, comprising laterally spaced-apart and parallel girders 6 located on either outward side of the main girders 7 of frame 2. The purpose of this wider part of the frame is to provide a wider base to telescopic arms 5.

The lower ends of telescopic arms 5 are pivotally secured to the front portion 8 of frame 2 by a first pivotal securing means. The latter consists, for each arm 5, of a longitudinal pivot pin 9 which is rigidly secured to a laterally-oriented pivot pin 10, itself mounted between girders 7 and 8. Thus, each arm 5 may pivot sideways and longitudinally as it is being extended or contracted.

The upper ends of telescopic arms 5 are pivotally secured to the front wall 11 of dump box 1 by a second pivotal securing means consisting of a first longitudinally-oriented pivot pin 12 which is rigidly secured to a laterally-oriented pivot pin 13. The upper ends of arms 5 thus also pivot sideways and longitudinally, permitting dump box 1 to be raised without friction or stress. The two arms 5 are raised and lowered in synchronism by the conventional hydraulic power system (not shown) of the truck.

It will be appreciated that the X-shape configuration of telescopic arms 5 lends stability and strength to the lift system for dump box 1. The front portions of box 1 and truck frame 2 are rigidly interconnected by the crossed arms 5, and these front portions cannot laterally tilt one with respect to the other. Therefore, practically no torsional force can be exerted on the hinge of the dump box to the truck frame when the truck tilts laterally. The X-shaped arrangement of the telescopic arms takes advantage of the natural resistance to torsion of dump box 1.

Figure 2 illustrates an alternate embodiment of the invention wherein the upper ends of the arms 5 are located closer together on the front wall 11 of the dump box. This positioning has been found to be suitable for a smaller size dump box, while Figure 1 illustrates the embodiment preferred for a larger dump box. For a still shorter dump box, the two telescopic arms need not be crossed as long as their lower ends are laterally spaced apart while their upper ends are laterally close together, so as to form an inverted V-shape.

It is to be noted that telescopic arms 5 may be smaller in diameter than the conventional single hydraulic arm now widely employed, since there are two arms 5 to provide the amount of work needed to raise the dump box.

The two arms 5 are preferably single-acting cylinder and piston units with a simple line feeding the two arms 5 through a series-connected conventional flow divider which divides the oil flow into equal parts to the two arms 5 regardless of loads.

The oil inlet port of each arm is preferably fitted with a safety device, which automatically prevents oil discharge from the arm in the event of failure of the hydraulic line of the related arm. Such a safety device can be fitted to the oil inlet port, the lifting arm of a dump box having a single lifting arm or two parallel lifting arms.

Preferably, an electric vibrator is attached to the bottom of the dump box at each front corner to prevent the load material from sticking to the dump box bottom when dumping.

Claims

1. A lift system for raising the dump box of a dump truck, comprising an elongated truck frame (2), a dump box (1) having a front wall and pivotally secured to the rear end of said frame, and a pair of hydraulic telescopic arms (5) pivotally secured at their lower ends by a first pivotal securing means (9, 10) to said frame and also pivotally secured at their upper ends to the said front wall of said dump box by a second pivotal securing means (12, 13), wherein said telescopic arms (5) are upwardly converging, defining an inverted V-shaped configuration when viewed longitudinally of the dump box (1).

2. A lift system as defined in claim 1, wherein said first and second pivotal securing means each include a longitudinally-oriented pivot pin (9, 12) and a laterally-oriented pivot pin (10, 13).

3. A lift system as defined in claim 2, wherein the front portion (8) of said frame (2) is widened, thereby providing a wider base for the lower ends of said telescopic arms (5).

4. A lift system as defined in claims 1, 2, and 3, wherein said telescopic arms (5) cross each other intermediate their length to define an X-shaped configuration when viewed longitudinally of the dump box (1).

5. In a lift system for raising the dump box (1) of a dump truck, comprising at least one hydraulic single-acting, lifting arm (5) having an oil inlet port and a hydraulic hose connected thereto, a safety device series connected between said inlet port and said hose to prevent oil discharge from said arm in the event of hose failure.

Fig.1

Fig.2

*Fig. 3*

Fig.4

Fig.5

0049482

European Patent Office

**EUROPEAN SEARCH REPORT**

Application number

EP 81 10 7801

| Category | Citation of document with indication, where appropriate, of relevant passages | Relevant to claim | CLASSIFICATION OF THE APPLICATION (Int. Cl. 3) |
|---|---|---|---|
| | CH - A - 480 221 (MATTILLE) <br> * Column 3, lines 22-29; figure 3 * <br> -- | 1 | B 60 P 1/16 |
| A | US - A - 2 553 454 (HENKE) <br> * Whole document * <br> -- | 1,4 | |
| A | GB - A - 1 128 656 (HOYNOR) <br> * Whole document * <br> -- | 1 | |
| A | FR - A - 2 415 733 (LEDUC) <br> * Claim 1 * <br> ------ | 5 | **TECHNICAL FIELDS SEARCHED (Int.Cl.3)** <br><br> B 60 P <br> B 61 D |

**DOCUMENTS CONSIDERED TO BE RELEVANT**

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 06-01-1982 | SCHMITTER |

EPO Form 1503.1 06.78